# DEMANDE DE BREVET EUROPEEN

(11) **EP 0 953 720 A1**
(43) Date de publication de la demande: **03.11.1999**
(21) Numéro de dépôt: 99401054.4
(22) Date de dépôt: 29.04.1999
(51) Int. Cl.: E06B 3/677, E06B 3/24

(54) **Vitrage multiple respirant**

(30) Priorité: 29.04.1998 FR 9805373
(71) Demandeur: Lapeyre, 93300 Aubervilliers (FR)
(72) Inventeur: Macquart, Philippe M., 92600 Asnieres (FR); Carel, Rémi M., 69005 Lyon (FR)
(74) Mandataire: Cardin, Elise

(57) **Abrégé**

La présente invention concerne un vitrage multiple respirant constitué d'au moins deux panneaux en verre (1, 2) séparés l'un de l'autre par une lame d'air (3) et réunis à leur périphérie par un cadre profilé (4).

Selon l'invention, le panneau en verre (1) intérieur est solidarisé hermétiquement au cadre profilé (4) par collage et le panneau en verre (2) extérieur est porté par l'ensemble cadre profilé (4)/panneau en verre (1) intérieur de manière à mettre la lame d'air (3) en communication avec l'atmosphère extérieur.

## Description

L'invention concerne un vitrage multiple respirant constitué d'au moins deux panneaux en verre séparés l'un de l'autre par une lame d'air et réunis à leur périphérie par un cadre profilé.

Il est usuel pour obtenir une isolation thermique et/ou acoustique de réaliser des vitrages isolants comportant au moins deux feuilles de verre séparées l'une de l'autre par une lame d'air relativement importante. Le vitrage isolant le plus fréquemment utilisé est un vitrage isolant comportant à sa périphérie un joint d'assemblage étanche à l'air pour contenir et maintenir entre les feuilles de verre une lame d'air déshydratée et exclure les risques de condensation sur les faces internes des feuilles de verre.

Cependant la réalisation de tels vitrages isolants hermétiquement scellés est limitée par l'épaisseur de la lame d'air et/ou par la masse des feuilles de verres, cela du fait de la nature des joints de scellage, ces derniers n'étant pas étudiés pour supporter de fortes contraintes.

Par ailleurs, la demande actuelle des utilisateurs s'oriente vers une isolation thermique et/ou acoustique de plus en plus performante qui peut être avantageusement obtenue en augmentant l'épaisseur de la lame d'air et/ou en augmentant l'épaisseur des feuilles de verre.

Une technique plus récente issue des études du CSTB (Centre Scientifique et Technique du Bâtiment) et dite du vitrage isolant respirant, c'est à dire un vitrage isolant dont la lame d'air est en relation avec l'air atmosphérique extérieur, a alors été développée. Cette technique permet la réalisation de vitrages isolants dont les performances thermique et/ou acoustique sont sensiblement améliorées et excluant les inconvénients propres aux vitrages isolants étanches à l'air.

La demande de brevet FR 2 672 930 propose ainsi un châssis à double vitrage constitué par quatre troncons d'un profilé creux maintenant les deux feuilles de verre, le profilé comprenant une cloison interne longitudinale déterminant un canal qui dans le tronçon supérieur du châssis est limitée par deux bouchons en vue de former une chambre mise en communication avec l'extérieur et l'espace inter-vitrage par des passages de sections identiques.

Le brevet US 5,299,399 propose également un vitrage isolant muni d'un système respiratoire. Ce vitrage isolant comprend deux panneaux en verre réunies ensemble à leur périphérie par un cadre périphérique, la lame d'air étant mise en communication avec l'atmosphère extérieur par la présence d'un canal réalisé dans l'épaisseur du cadre périphérique.

Les vitrages ainsi réalisés peuvent avantageusement présenter une lame d'air dont l'épaisseur ne constitue plus une contrainte de fabrication, de même que l'épaisseur des panneaux en verre est facilement modulable.

Cependant, de tels vitrages isolants respirants, du fait de l'aménagement, au niveau du cadre périphérique, d'un canal de communication entre la lame d'air séparant les deux panneaux en verre et l'atmosphère extérieur ne sont pas d'une réalisation aisée. En effet, la réalisation de perforations au travers du cadre constitue une étape de fabrication supplémentaire, entraîne, du fait de la présence d'un nouveau type de cadre, des contraintes supplémentaires de stockage et de montage.

De plus, avec certains types de cadres fréquemment utilisés, tel qu'un cadre réalisé à partir de profilés plastiques creux, la réalisation des perforations n'est pas aisée du fait de présence de pièces métalliques de renfort positionnées à l'intérieur des profilés.

L'invention a pour but un vitrage multiple respirant procurant de bonnes performances d'isolation acoustique et/ou thermique et obviant aux inconvénients précédemment cités.

Ce but est atteint par l'invention par un vitrage multiple respirant constitué d'au moins deux panneaux en verre séparés l'un de l'autre par une lame d'air et réunis à leur périphérie par un cadre profilé. Ledit vitrage multiple respirant est tel que le panneau en verre intérieur est solidarisé hermétiquement au cadre profilé par collage et tel que le panneau en verre extérieur est porté par l'ensemble cadre profilé/panneau en verre intérieur de manière à mettre la lame d'air en communication avec l'atmosphère extérieur. On entend par panneau en verre intérieur le panneau en verre du vitrage qui est orienté vers l'intérieur de l'enceinte close par ce vitrage et par panneau en verre extérieur celui qui est orienté vers l'extérieur de l'enceinte.

Grâce au vitrage multiple respirant selon l'invention, il n'est pas nécessaire de réaliser des perforations dans l'épaisseur du cadre profilé pour mettre la lame d'air en communication avec l'atmosphère extérieur. En effet, la communication est réalisée par le montage du panneau en verre extérieur sur le cadre profilé.

Selon un mode de réalisation préférée de l'invention, le panneau en verre extérieur est maintenu par serrage sur au moins trois côtés de manière à laisser un espace entre le cadre profilé et au moins une partie du quatrième côté du panneau en verre extérieur, ledit espace réalisant la communication entre la lame d'air et l'atmosphère extérieur. De cette manière, ni le cadre profilé, ni le panneau en verre extérieur ne subissent de modification de structure. De plus, le panneau en verre extérieur ne nécessitant pas un maintien hermétique avec le cadre profilé, un simple serrage permet un montage facile à réaliser, en cas de bris de verre, le remplacement du panneau en verre est aisé et le montage par serrage dudit panneau en verre sur au moins trois de ses côtés permet d'obtenir facilement un espace entre le cadre profilé et au moins une partie du quatrième côté.

De préférence, le quatrième côté est le côté supérieur du panneau en verre extérieur. Ainsi, on évite, en particulier, les problèmes d'infiltration.

Selon une variante avantageuse de l'invention, l'espace entre le cadre profilé et le bord intérieur du quatrième côté du panneau en verre extérieur est comblé par un filtre perméable à l'air. De cette manière, on évite l'introduction de poussières voir d'insectes. Un tel filtre pourra être, par exemple, un morceau de bande de fibres organiques ou minérales non tissées et ensimées.

Selon un mode de réalisation préférée de l'invention, le filtre est disposé sur toute la longueur du bord intérieur du quatrième côté du panneau en verre extérieur et le bord extérieur du quatrième côté du panneau en verre extérieur est maintenu par pression sur au moins une partie de sa longueur.

De cette manière, le montage du filtre n'est pas contraignant et, grâce au maintien par pression sur une certaine zone du bord extérieur, on détermine facilement les dimensions de l'espace assurant la mise en communication de la lame d'air avec l'atmosphère extérieure. De plus, du fait de la pression sur une partie du bord extérieur du quatrième côté du panneau en verre extérieur, le filtre est maintenu en place sans pour autant être écraser.

Selon une variante préférée de l'invention, le maintien du bord extérieur du quatrième côté du panneau en verre extérieur est réalisé à l'aide d'une parclose à joints à lèvre fixée au cadre profilé et sectionnée sur au moins une partie de sa longueur de manière à permettre le passage de l'air. Cette réalisation permet ainsi de déterminer les dimensions pour le passage de l'air indépendamment du montage des panneaux en verre sur le cadre profilé.

Selon un mode de réalisation avantageux de l'invention, le cadre profilé présente une partie en U intégrée entre les deux bords des panneaux en verre. De cette manière, le cadre profilé joue avantageusement le rôle de cadre support du vitrage et d'espaceur pour maintenir un écart constant entre les deux panneaux en verre. Ainsi, il permet, par rapport aux vitrages doubles scellés, d'obtenir, lors du montage dudit vitrage en tant que fenêtre, un clair de vue plus important par rapport à l'ouverture dans la maçonnerie, c'est à dire que la surface verre apparente est plus grande. En effet, la profondeur de feuillure du cadre profilé est moins importante du fait que les panneaux en verre sont solidarisés au cadre profilé de manière indépendante.

Selon une variante avantageuse de l'invention, ladite partie en U est ouverte vers l'extérieur du vitrage sur au moins une partie de sa longueur et différents éléments de fixation insérés dans le cadre profilé pénètrent dans ladite partie en U du cadre profilé. En ménageant des éléments de fixation dans le cadre profilé de cette manière, on optimise l'espace nécessaire à l'insertion de ces éléments en diminuant l'épaisseur totale des cadres profilés et en particulier l'épaisseur du cadre profilé débordant des panneaux en verre. De cette manière on gagne encore en clair de vue lorsque ces vitrages sont montés en tant que fenêtre.

Selon une variante de l'invention, les panneaux en verre sont des feuilles de verres d'épaisseurs différentes.

Selon deux autres variantes de l'invention, au moins un des panneaux en verre est un vitrage feuilleté ou un vitrage double scellé de manière étanche. Par vitrage scellé de manière étanche, on entend les vitrages isolants habituels constitués de deux feuilles de verre séparées l'une de l'autre par une lame de gaz et les vitrages isolants sous vide, c'est à dire les vitrages constitués de deux feuilles de verre entre lesquelles un vide a été réalisé.

En modifiant l'épaisseur des feuilles de verre ou en employant des vitrages isolants, il est ainsi possible d'obtenir des vitrages multiples respirants dont les propriétés thermique et/ou acoustique sont adaptables selon les besoins sans remettre en cause la structure générale dudit vitrage multiple respirant.

Selon un mode de réalisation préférée de l'invention, ledit vitrage multiple respirant constitue le vantail d'une fenêtre.

D'autres détails et caractéristiques avantageuses de l'invention ressortiront, ci-après, de la description d'exemples de réalisation en référence aux figures qui représentent :
- **Figure 1** : une coupe horizontale d'une partie latérale d'un vitrage multiple respirant selon l'invention et constituant le vantail d'une fenêtre,
- **Figure 2** : une coupe verticale de la partie supérieure du vitrage multiple respirant de la figure 1,
- **Figure 3** : une coupe horizontale de la partie latérale d'une variante de réalisation du vitrage multiple respirant selon l'invention.

On précise tout d'abord que, par souci de clarté, toutes les figures ne respectent pas rigoureusement les proportions entre les divers éléments.

Selon ces figures, on a représenté un type de vitrage multiple respirant selon l'invention. Ce vitrage multiple respirant est constitué de deux feuilles de verre 1 et 2 séparés l'une de l'autre par une lame d'air 3 et réunies à leur périphérie par un cadre profilé 4 en chlorure de polyvinyle (PVC) creux, ledit cadre profilé 4 étant rigidifié à l'aide d'une armature métallique 5 connue de l'homme du métier et présentant une partie 6 en U intégrée entre les deux feuilles de verre 1 et 2. La feuille de verre 1 représente le panneau en verre intérieur et la feuille de verre 2 représente le panneau en verre extérieur.

La feuille de verre 1 est scellée de manière étanche au cadre profilé 4 à l'aide d'un joint de colle 7. Le joint de colle 7 est connu de l'homme du métier et sera, par exemple, une colle à base de polyuréthane ou de silicone.

Une fois la feuille de verre 1 scellée au cadre profilé 4, on fixe sur le cadre profilé 4 une parclose à joints à lèvre 8 de manière à recouvrir les bords apparents de la feuille de verre 1. Ainsi, le joint de colle 7 est protégé d'éventuelles poussières et infiltrations.

L'ensemble cadre profilé 4 et feuille de verre 1 ainsi obtenu constitue alors l'élément porteur pour la feuille de verre 2.

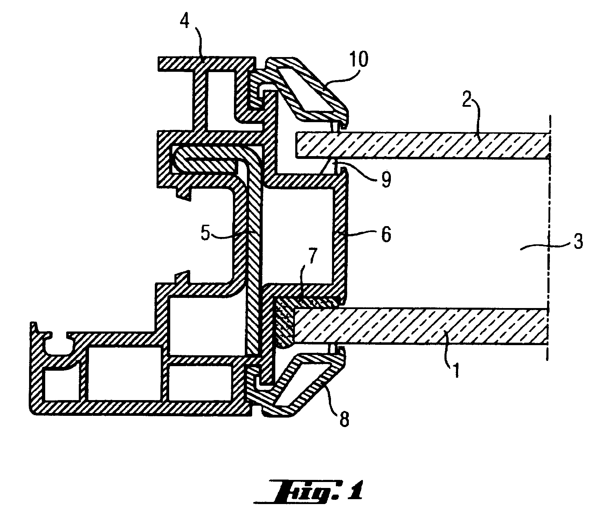

La figure 1 représente une coupe d'une partie latérale du vitrage multiple respirant, cette partie latérale ne permettant pas la mise en communication de la lame d'air 3 avec l'atmosphère extérieur.

Selon cette représentation, on observe que la feuille de verre 2 est maintenue par serrage, le cadre profilé 4 présentant sur sa partie 6 en U des joints à lèvre 9 sur lesquels la feuille de verre 2 vient prendre appui et une parclose à joints à lèvre 10 fixée au cadre profilé 4 qui recouvre les bords apparents de la feuille de verre 2. L'invention ne se limite pas à ce type de serrage, tout type de serrage connu par l'homme du métier entre dans le cadre de l'invention tel que, par exemple, en remplaçant les joints à lèvres par des joints « moussés». De même, l'invention ne se limite au maintien par serrage de la feuille de verre 2, mais tout autre type de maintien entre dans le cadre l'invention tel que, par exemple, par collage.

Le maintien de la feuille de verre 2 tel que représenté sur la figure 1 est réalisé, de préférence, également sur deux autres côtés du vitrage multiple respirant.

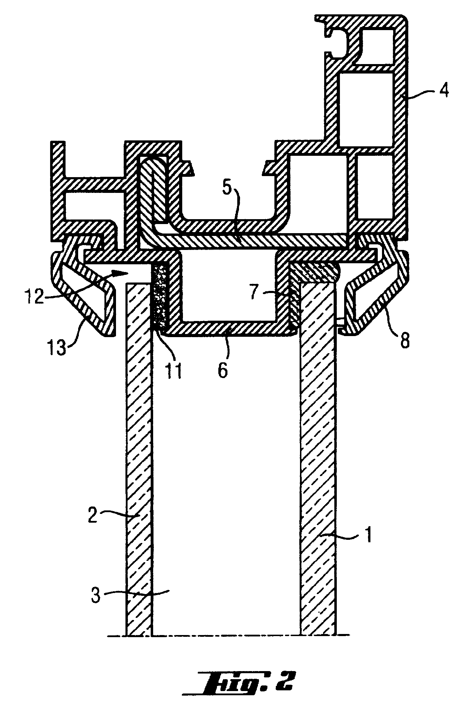

La figure 2 représente une coupe verticale de la partie supérieure du vitrage multiple respirant, cette partie supérieure permettant la mise en communication de la lame d'air 3 avec l'atmosphère extérieure.

On observe, sur cette représentation, que le bord interne de la feuille de verre 2 est en contact avec la partie 6 en U du cadre profilé 4 par l'intermédiaire d'un filtre 11 perméable à l'air. Ce filtre 11 perméable à l'air sera, par exemple, un morceau de bande de fibres organiques non tissées et ensimées disposé sur toute la longueur du bord interne de la feuille de verre 2.

Par contre, le chant et le bord externe de la feuille de verre 2 restent libres de tout contact avec le cadre profilé 4. De cette manière, la lame d'air 3 communique avec l'atmosphère extérieure en contournant le bord de la feuille de verre 2 grâce à l'espace 12 existant entre ledit bord et le cadre profilé 4 et passe à travers le filtre 11 qui, ainsi, évite l'introduction d'éventuelles corps étrangers, tels que des poussières, entre les deux feuilles de verre 1 et 2.

Selon cette représentation, une parclose à joints à lèvre 13 est fixée au cadre profilé 4 de manière à chevaucher le bord externe de la feuille de verre 2 et celle-ci est sectionnée de manière à ne pas créer de contact entre ladite parclose 13 et le bord externe de la feuille de verre 2. De préférence, ladite parclose à joints à lèvre 13 est sectionnée sur uniquement une partie de sa longueur de sorte que la zone sectionnée détermine l'ouverture nécessaire et suffisante au passage de l'air pour la mise en communication de la lame d'air 3 avec l'atmosphère extérieur et que le reste de la parclose, c'est à dire la partie non sectionnée, exerce une pression sur le bord de le feuille de verre 2.

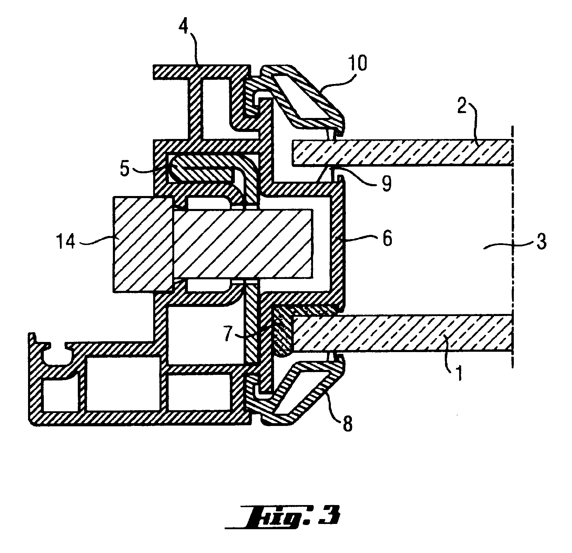

La figure 3 représente une coupe horizontale de la partie latérale d'un vitrage multiple selon l'invention dont des éléments 14 de fixation dudit vitrage sont insérés dans le cadre profilé 4.

Selon cette représentation, on observe que la partie 6 en U est ouverte vers l'extérieur du vitrage multiple respirant. Une telle ouverture permet d'insérer des éléments 14 de fixation de sorte que ceux-ci pénètrent dans la partie 6 en U du cadre profilé 4. L'élément 14 de fixation est, par exemple, une crémone positionnée dans le cadre profilé 4 de la manière représentée sur la figure 3. De cette manière, il est possible de positionner les éléments de fixation 14 sans qu'ils débordent du cadre profilé 4 et qu'il soit nécessaire de prévoir un cadre profilé présentant une épaisseur importante débordant des feuilles de verre 1 et 2.

L'invention ne se limite pas à ces types de réalisation et doit être interprétée de façon non limitative et englobant tout type de vitrage multiple respirant constitué d'au moins deux panneaux en verre séparés l'un de l'autre par une lame d'air et réunis à leur périphérie par un cadre profilé, le panneau en verre intérieur étant solidarisé hermétiquement au cadre profilé par collage et le panneau en verre extérieur étant porté par l'ensemble cadre profilé/panneau en verre intérieur de manière à mettre la lame d'air en communication avec l'atmosphère extérieur.

## Revendications

1. Vitrage multiple respirant constitué d'au moins deux panneaux en verre (1, 2) séparés l'un de l'autre par une lame d'air (3) et réunis à leur périphérie par un cadre profilé (4), **caractérisé en ce que** le panneau en verre (1) intérieur est solidarisé hermétiquement au cadre profilé (4) par collage **et en ce que** le panneau en verre (2) extérieur est porté par l'ensemble cadre profilé (4)/panneau en verre (1) intérieur de manière à mettre la lame d'air (3) en communication avec l'atmosphère extérieur.

2. Vitrage multiple respirant selon la revendication 1, **caractérisé en ce que** le panneau en verre (2) extérieur est maintenu par serrage sur au moins trois côtés de manière à laisser un espace (12) entre le cadre profilé (4) et au moins une partie du quatrième côté du panneau en verre (2) extérieur, ledit espace (12) réalisant la communication entre la lame d'air (3) et l'atmosphère extérieur.

3. Vitrage multiple respirant selon la revendication 2, **caractérisé en ce que** le quatrième côté est le côté supérieur du panneau en verre (2) extérieur.

4. Vitrage multiple respirant selon la revendication 2 ou 3, **caractérisé en ce que** l'espace (12) entre le cadre profilé (4) et le bord intérieur du quatrième côté du panneau en verre (2) extérieur est comblé par un filtre (11) perméable à l'air.

5. Vitrage multiple respirant selon la revendication 4, **caractérisé en ce que** le filtre (11) est disposé sur toute la longueur du bord intérieur du quatrième côté du panneau en verre (2) extérieur **et en ce que** le bord extérieur du quatrième côté du panneau en verre (2) extérieur est maintenu par pression sur au moins une partie de sa longueur.

6. Vitrage multiple respirant selon la revendication 5, **caractérisé en ce que** le maintien par pression du bord extérieur du quatrième côté du panneau en verre (2) extérieur est réalisé à l'aide d'une parclose à joint à lèvre (13) fixée au cadre profilé (4) et sectionnée sur au moins une partie de sa longueur de manière à permettre le passage de l'air.

7. Vitrage multiple respirant selon l'une des revendications précédentes, **caractérisé en ce que** le cadre profilé (4) présente une partie (6) en U intégrée entre les deux panneaux en verre (1, 2).

8. Vitrage multiple respirant selon la revendication 7, **caractérisé en ce que** ladite partie (6) en U du cadre profilé (4) est ouverte vers l'extérieur du vitrage sur au moins une partie de sa longueur **et en ce que** différents éléments (14) de fixation du vitrage insérés dans le cadre profilé (4) pénètrent dans ladite partie (6) en U du cadre profilé.

9. Vitrage multiple respirant selon l'une des revendications précédentes, **caractérisé en ce que** les panneaux en verre (1, 2) sont des feuilles de verre simples d'épaisseurs différentes.

10. Vitrage multiple respirant selon l'une des revendications 1 à 8, **caractérisé en ce qu**'au moins un panneau en verre (1, 2) est un vitrage feuilleté.

11. Vitrage multiple respirant selon l'une des revendications 1 à 8, **caractérisé en ce qu**'au moins un panneau en verre (1, 2) est un vitrage double scellé de manière étanche.

12. Vitrage multiple respirant selon l'une des revendications précédentes, **caractérisé en ce qu**'il constitue le vantail d'une fenêtre.
